# EUROPÄISCHE PATENTSCHRIFT

(11) **EP 1 635 086 B1**
(45) Veröffentlichungstag und Bekanntmachung des Hinweises auf die Patenterteilung: **09.05.2007**
(21) Anmeldenummer: 05016484.7
(22) Anmeldetag: 29.07.2005
(51) Int. Cl.: F16F 15/28, F04D 29/66, G01M 1/30

(54) **Unwuchtausgleichselement, Pumpe und Verfahren zum Auswuchten elektromotorisch angetriebener Pumpen**
Balancing element, pump and method to balance electrically driven pumps
Elément d'équilibrage, pompe et procédé d'équilibrage des pompes entraînées par des moteurs électriques

(30) Priorität: 11.09.2004 DE 102004044070
(43) Veröffentlichungstag der Anmeldung: 15.03.2006
(73) Patentinhaber: Pierburg GmbH, 41460 Neuss (DE)
(72) Erfinder: Bumbel, Andreas, 44575 Castrop-Rauxel (DE); Bonse, Michael, 40625 Düsseldorf (DE)
(74) Vertreter: Ter Smitten, Hans

(56) Entgegenhaltungen:
- EP-A- 0 711 924
- DE-A1- 10 259 179
- DE-A1- 19 501 959
- DE-U1- 9 303 470
- US-A- 1 733 821
- US-A- 3 611 829

## Beschreibung

Die Erfindung betrifft ein Unwuchtausgleichselement zur Befestigung auf einem Ende einer Motor- oder Pumpenwelle, wobei das Unwuchtausgleichselement eine zur Mittelachse koaxiale innere Umfangsfläche aufweist, deren Innendurchmesser im wesentlichen dem Außendurchmesser der Welle entspricht sowie eine Pumpe, insbesondere Sekundärluftpumpe für Verbrennungskraftmaschinen, welche von einem Elektromotor angetrieben ist, wobei zumindest ein Laufrad der Pumpe auf einer Antriebswelle des Elektromotors angeordnet ist, sowie ein Verfahren zum Auswuchten einer derartigen elektromotorisch angetriebenen Pumpe.

Derartige Unwuchtausgleichselemente, Pumpen und Verfahren zum Auswuchten in derartiger Pumpen mittels Unwuchtausgleichselementen sind bekannt und werden in einer Vielzahl von Anmeldungen beschrieben. So wird in der DE 93 03 470 U1 ein Gebläse beschrieben, dessen Gebläserad auf einer von einem Elektromotor angetriebenen Welle angeordnet ist, wobei ein Wuchtgewicht zum Auswuchten des Gebläses auf das aus einer Gehäuseöffnung hinaus ragende Ende der Welle aufgesetzt wird. Als Unwuchtausgleichselement dient dabei ein radial aufgetrennter Ring, welcher unterschiedlich breit und schwer ausgeführt werden kann. In einer beschriebenen Ausführungsform wird das Unwuchtausgleichselement durch einen Seegerring gebildet, welcher nach der Endprüfung des Gebläses mittels einer Seegerringzange entsprechend der festgestellten Unwucht in eine Ringnut der Welle eingesetzt und ausgerichtet wird.

Aus der EP 0 711 924 B1 ist eine elektrisch angetriebene Luftpumpe bekannt, welche ein Gehäuse aufweist, in dem ein Elektromotor sowie das Pumpenwerk angeordnet sind, wobei ein Auswuchten des Elektromotors mit montiertem Pumpenrad in eingebautem Zustand bei noch nicht verschlossener Pumpenseite durch Setzen von Auswuchtmarken an einem Laufrad des Pumpenrades erfolgt.

Bei den bekannten Verfahren handelt es sich in der Regel um iterative Verfahren, bei denen durch mehrmaliges Laufenlassen des Elektromotors beziehungsweise der Pumpe die gemessene Unwucht mit jedem weiteren Schritt minimiert werden soll. Dies kann beispielsweise durch kleine Bohrungen in den Laufrädern erfolgen. Es handelt sich somit um nicht klassifizierte Unwuchtausgleichselemente.

Aufgabe der Erfindung ist es ein klassifiziertes Unwuchtausgleichselement zu schaffen, welches in einem einzelnen Arbeitsschritt auf einer Pumpenwelle angebracht werden kann, wozu möglichst nur eine einzelne Messung der Unwucht erforderlich sein soll. Die Übertragung von Schallemissionen, insbesondere Körperschallemissionen nach dem Einbau beispielsweise an einen Verbrennungsmotor oder eine Karosserie eines Fahrzeugs sollen minimiert werden.

Diese Aufgabe wird dadurch gelöst, dass die innere Umfangsfläche des Unwuchtausgleichselementes in einem ersten Teilbereich biegsame Federarme aufweist, welche derart ausgebildet sind, dass die Federarme im eingebauten Zustand eine zumindest in Umfangsrichtung kraftschlüssig wirkende Verbindung zur Welle herstellen. Hierdurch wird ein formschlüssiges Aufsetzen des Unwuchtausgleichselementes auf ein Motorwellenende beziehungsweise eine Nabe einer Pumpe unter einem gemessenen Wuchtwinkel möglich. Trotz des ungleichmäßigen Gewicht des Körpers ist ein unabsichtliches Verdrehen ausgeschlossen.

In einer bevorzugten Ausführungsform sind die Federarme als in Achsrichtung erstreckende Ringsegmente ausgebildet, wodurch das Bauteil kostengünstig herstellbar und in seiner Form einfach ist.

In einer weiteren Ausgestaltung der Erfindung weist die innere Umfangsfläche in einem zweiten starren Teilbereich Nuten auf, welche in Achsrichtung verlaufen, so dass die Formschlußkräfte durch die geringere Auflagefläche auch in diesem starren Bereich größer sind und bei einer Befestigung mittels Kleben sich ausreichend Kleber in die Nuten setzen kann um eine feste stoffschlüssige Verbindung zwischen Welle oder Nabe der Pumpe und dem Unwuchtausgleichselement zu schaffen.

In einer weiteren Ausgestaltung der Erfindung weist das Unwuchtausgleichselement eine geschlossene Außenumfangsfläche auf, welche in radialer Richtung über definierte Winkelbereiche eine vollständig mit Material gefüllte Verbindung zur Innenumfangsfläche aufweist und in anderen Winkelbereichen lediglich durch einzelne Stege mit der Innenumfangsfläche verbunden ist. Auf diese Weise wird ein Gegengewicht zur vorhandenen Unwucht geschaffen, da der Schwerpunkt in Achsrichtung dieses Unwuchtausgleichselementes nicht im Mittelpunkt liegt. Des weiteren wird durch die Ausführung mit den einzelnen Stegen zwischen den Umfangsflächen dennoch eine ausreichende Festigkeit im ansonsten hohlen Bereich gewährleistet.

In einer bevorzugten Ausführungsform ist das Unwuchtausgleichselement einteilig im Spritzgußverfahren hergestellt, wodurch Zeit- und Herstellkosten minimiert werden.

Des weiteren wird die vorbeschriebene Aufgabe durch eine Pumpe gelöst, bei der die Antriebswelle derart über das Laufrad der Pumpe in zum Elektromotor abgewandter Richtung übersteht, dass ein erfindungsgemäßes Unwuchtausgleichselement auf dem überstehenden Ende der Welle befestigt ist. Somit müssen an bestehenden Bauteilen der Pumpe wie den Laufrädern zum Unwuchtausgleich keine Veränderungen mehr vorgenommen werden. Die Anordnung eines derartigen Unwuchtausgleichselement auf dem Wellenende ist in einem Schritt durchzuführen.

In einer bevorzugten Ausgestaltung verläuft ein Anschlussstutzen der Pumpe koaxial zur Antriebswelle, so dass die Pumpe im komplett zusammengebauten Zustand geprüft und ausgewuchtet werden kann.

In einer weiterführenden Ausführungsform erfolgt die Befestigung des Unwuchtausgleichselement auf der Antriebswelle mittels eines anaeroben Klebers, mit dem auch die Laufräder auf der Antriebswelle befestigt werden können. Ein derartiger Kleber trocknet erst unter Luftabschluß, so dass eine Zwischenlagerung der Pumpen vor der Auswuchtung möglich wird und die Restklebermenge auf der Welle vom Befestigen der Laufräder zur Befestigung des Unwuchtausgleichselementes ausreicht.

In einer weiterführenden Ausführungsform der Pumpe korrespondieren die zueinander gerichteten axialen Außenflächen des Unwuchtausgleichselementes und einer Nabe des Pumpenlaufrades in ihrer Form, wodurch ein klar definierter Anschlag des Unwuchtausgleichselement an der Nabe des Pumpenlaufrades vorliegt und ein Luftabschluss sichergestellt wird.

Die oben genannte Aufgabe wird des weiteren durch ein Verfahren zum Auswuchten erfindungsgemäßer elektrischer Pumpen durch Einebenenwuchtung mit folgenden Schritten gelöst:
a) Einlegen der Pumpe in eine Haltevorrichtung unter Zwischenlage von Elastomeren und Herstellen einer elektrischen Verbindung zu einer Spannungsquelle.
b) Starten des Elektromotors.
c) Messen der Schwingbeschleunigung zur Bestimmung der Beschleunigungsamplituden in axialer und radialer Richtung und Messen der Schwingwinkellage zum Bestimmen des Wuchtwinkels und der Wuchtklasse.
d) Aufsetzen eines klassifizierten Unwuchtausgleichselementes nach einem der Ansprüche 1 bis 5 entsprechend des Wuchtwinkels und der Wuchtklasse.
e) Herausnehmen der Pumpe aus der Haltevorrichtung.

Bei einem derartigen Verfahren reicht eine einzige Messung zum Ausgleichen der vorhandenen Unwucht aus.

Vorzugsweise wird zum Messen der Schwingwinkellage eine Lichtschranke sowie eine formschlüssig mit der Antriebswelle verbundene Reflektionsscheibe verwendet, welche nach erfolgter Messung einfach wieder demontierbar ist.

Zum Messen der Schwingbeschleunigung wird vorzugsweise ein Triaxsensor verwendet, mit dem sowohl die axiale als auch die radiale Schwingbeschleunigung an der Pumpe gemessen wird.

Die Messungen werden vorzugsweise bei Betriebsdrehzahl der fertig montierten Pumpe durchgeführt, so dass auch die tatsächlich im Betrieb der Pumpe auftretenden Unwuchten erkannt werden.

Zur weiteren Verbesserung der Ergebnisse wird die Messung der Schwingbeschleunigung an den Befestigungspunkten der Pumpe zur Verbrennungskraftmaschine oder zum Fahrzeug durchgeführt. Dies führt nach dem Einbau der Pumpe zu deutlich reduzierter Körperschallübertragung auf das Motorgehäuse oder die Karosserie.

Bei nicht gleicher Schwingwinkellage der axialen und radialen Beschleunigungsamplituden wird der Wuchtwinkel und die Wuchtklasse vorzugsweise durch Gewichtung der Beschleunigungsamplituden unter Berücksichtigung der Schwingwinkel berechnet. Durch eine derartige Vorgehensweise bleibt ein Wuchtvorgang in der Regel ausreichend, um gute Ergebnisse zu erzielen.

In einem weiterführenden Verfahrensschritt wird das klassifizierte Unwuchtausgleichselement vor der Befestigung an der Welle in einer Ausnehmung einer Winkelgradschabe fixiert, so dass nach Ermittlung des Wuchtwinkels zur Nullstellung das Unwuchtausgleichselement durch Drehung der Winkelgradschabe auf den ermittelten Wuchtwinkel in die korrekte Lage zur Welle gedreht und auf die Welle geschoben und befestigt werden kann. Dies führt zu einer exakten Befestigung des Unwuchtausgleichselementes entsprechend der gemessenen Daten. Die Anzahl der notwendigen Messungen sowie der Montageschritte im Vergleich zu anderen bekannten Verfahren wird durch ein solches Verfahren reduziert.

Es wird somit ein Unwuchtausgleichselement geschaffen, welches einfach herstellbar und montierbar ist und wodurch eine qualitativ hochwertige Auswuchtung mit nur einer Messung hergestellt wird. Entsprechend wird ein schwingungsarmer Lauf einer mit einem solchen Ausgleichselement ausgerüsteten Pumpe sicher gestellt. Das Verfahren zum Auswuchten einer derartigen Pumpe mit einem erfindungsgemäßen Unwuchtausgleichselement beinhaltet eine deutlich reduzierte Anzahl an Montageschritten im Vergleich zu bekannten Verfahren. Somit ist eine weitgehend schwingungsfreie Pumpe kosten- und zeitreduziert herstell- und montierbar. Schallemissionen nach dem Einbau in den Motor werden reduziert.

Ein erfindungsgemäßes Unwuchtausgleichselement sowie eine mit einem solchen Unwuchtausgleichselement ausgerüstete Pumpe sind in den Zeichnungen dargestellt, wobei auch das erfindungsgemäße Verfahren zum Auswuchten derartiger Pumpen beschrieben wird.

Figur 1 zeigt in Seitenansicht ein erfindungsgemäßes Unwuchtausgleichselement in geschnittener Darstellung.

Figur 2 zeigt das Unwuchtausgleichselement aus Figur 1 in perspektivischer Ansicht.

Figur 3 zeigt eine geschnittene Darstellung einer erfindungsgemäßen Pumpe am Beispiel einer Sekundärluftpumpe in Seitenansicht.

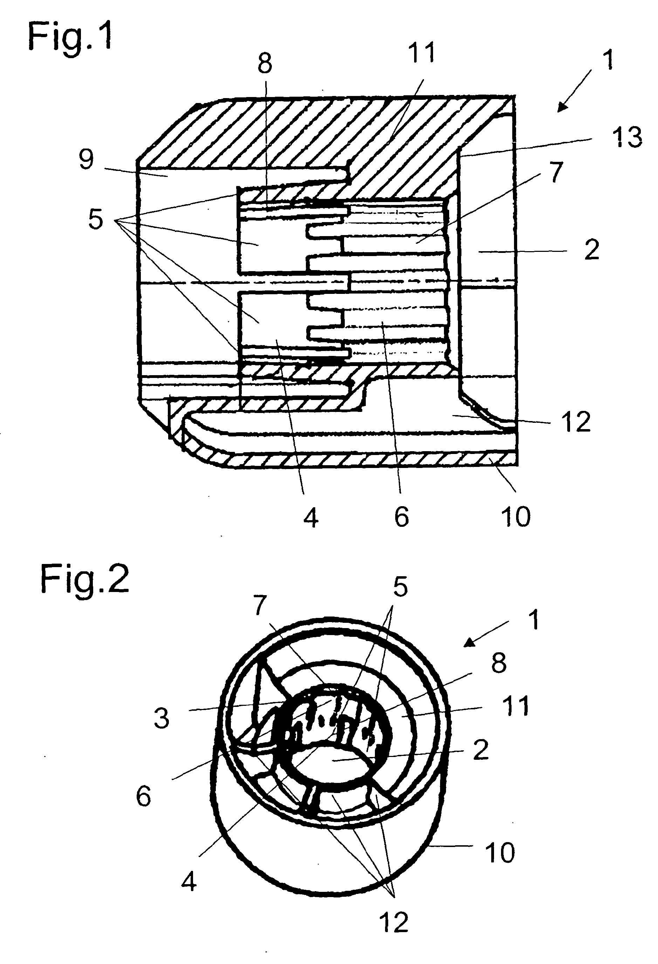

Das in den Figuren 1 und 2 dargestellte Unwuchtausgleichselement 1 besteht aus einem Körper, welcher eine axial verlaufende Öffnung 2 aufweist, welche durch eine innere Umfangsfläche 3 begrenzt wird. Diese innere Umfangsfläche 3 teilt sich in einen ersten Teilbereich 4, der durch biegsame Federarme 5 gebildet wird, sowie einen zweiten Teilbereich 6, in dem die Öffnung 2 Nuten 7 aufweist. Dieser zweite Teilbereich 6 schließt sich unmittelbar an den ersten Teilbereich 4 an. Die biegsamen Federarme 5 werden dadurch gebildet, dass in diesem ersten Teilbereich 4 axial verlaufende Ausnehmungen 8 angeordnet sind und das Unwuchtausgleichselement 1 eine zweite Öffnung 9 aufweist, deren Durchmesser größer ist als der Durchmesser der Öffnung 2. Diese Öffnung 9 reicht bis zum Beginn des ersten Teilbereiches 4 und setzt sich nutartig und koaxial im zur Achse außen liegenden Bereich fort. Entsprechend bleiben die biegsamen Federarme 5 zwischen diesem größeren Durchmesser der zweiten Öffnung 9 und dem kleineren Durchmesser der Öffnung 2 stehen. Es ist noch zu bemerken, dass diese biegsamen Federarme 5, welche im wesentlichen durch kleine Ringsegmente gebildet sind, im Vergleich zum Durchmesser der Öffnung 2 leicht zur Achse gebogen sind, so dass eine Federkraft von ihnen auf eine hier nicht dargestellte Welle, welche einen entsprechenden Außendurchmesser aufweist, ausgeübt wird.

Nach axial außen wird das Unwuchtausgleichselement 1 durch eine Außenumfangsfläche 10 begrenzt, welche ebenfalls im wesentlichen koaxial zur Achse verläuft. Um einen entsprechenden Unwuchtausgleich vornehmen zu können, ist der entstehende Hohlraum zwischen der inneren Umfangsfläche 3 und der Außenumfangsfläche 10 über bestimmte Winkelbereiche mit Material gefüllt, so dass eine über diesen Winkelbereich verlaufende Verbindung 11 zwischen der inneren Umfangsfläche 3 und der Außenumfangsfläche 10 gewährleistet ist. In einem anderen radialen Winkelbereich wird eine Verbindung zwischen den Umfangsflächen 3, 10 lediglich durch Stege 12 hergestellt um eine Festigkeit der Unwuchtkappe sicher zu stellen, und somit die Wände der Umfangsflächen 13 möglichst dünn ausführen zu können.

Je nach gewünschter Wuchtklasse ist der mit Material gefüllte Winkelbereich größer oder kleiner zu wählen. Entsprechend stehen unterschiedliche klassifizierte Unwuchtausgleichselemente zur Verfügung. Auch die Füllhöhe entlang der Achse kann gegebenenfalls verändert werden.

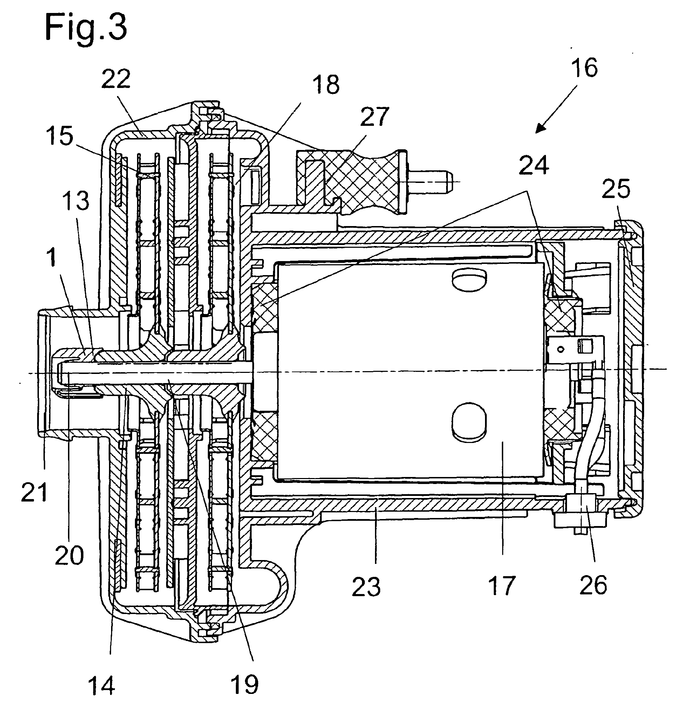

Des weiteren wird insbesondere aus Figur 3 ersichtlich, dass das Unwuchtausgleichselement 1 eine axial begrenzende Außenfläche 13 aufweist, welche in seiner Form mit einer Nabe 14 eines Laufrades 15 einer Sekundärluftpumpe 16 korrespondiert. Diese Sekundärluftpumpe 16 wird von einem Elektromotor 17 angetrieben, wobei zwei Laufräder 15, 18 unmittelbar axial hintereinander auf einer Welle 19 angeordnet sind, welche gleichzeitig als Pumpen- und Motorwelle 19 ausgebildet ist.

Beim Auswuchten einer derartigen Sekundärluftpumpe wird dann ein entsprechend der ermittelten Wuchtklasse klassifiziertes Unwuchtausgleichselement 1 im ermittelten Wuchtwinkel auf die Motorwelle 19 aufgeschoben. Dazu ist ein Ende 20 der Welle 19 verlängert ausgebildet. Um bei vollständig zusammen gebauter Pumpe 16 ein solches Unwuchtausgleichselement 1 anbringen zu können, ist ein Anschlußstutzen 21 koaxial zur Wellenachse angeordnet, wobei der Anschlussstutzen 21 an einem Deckel 22 der Pumpe 16 ausgebildet und axial zugänglich ist. Dieser Deckel 22 wird beim Zusammenbau der Sekundärluftumpe 16 an einem Gehäuse 23, in dem auch der Elektromotor 17 unter Zwischenlage von Elastomerringen 24 befestigt ist, montiert. Dieses Gehäuse 23 wird von dem zur Pumpenseite abgelegenen Ende wiederum durch einen zweiten Deckel 25 verschlossen.

Es handelt sich im vorliegenden Fall um eine Sekundärluftpumpe 16, welche als zweistufiges Radialgebläse ausgeführt ist. Elektrische Anschlußkontakte 26 zum Anschluß des Motors 17 an eine externe Spannungsquelle sind aus dem Gehäuse 23 heraus geführt. Zusätzlich sind am Gehäuse 23 Befestigungspunkte 27 ausgebildet, an denen die Sekundärluftpumpe 16 beim Einbau in einen Verbrennungsmotor oder an eine Karosserie eines Fahrzeugs befestigt werden kann.

Ein Auswuchten einer derartigen elektrischen Sekundärluftpumpe 16 erfolgt in der Weise, dass zunächst die Sekundärluftpumpe 16 in eine Haltevorrichtung unter Zwischenlage von Elastomerringen eingelegt wird. Im Bereich der Befestigungspunkte 27 wird ein Triaxsensor angeordnet, der die axialen und radialen Beschleunigungen, welche durch eine eventuell vorhandene Unwucht entstehen, aufnimmt. Da zu diesem Zeitpunkt auf der Welle 19 noch kein Unwuchtausgleichselement 1 angeordnet ist, wird an dieser Stelle eine Reflektionsscheibe angeordnet, welche mit einer Lichtschranke, die Teil der Haltevorrichtung ist, zusammen wirkt, wodurch im Betrieb die Schwingwinkellage auf bekannte Art und Weise gemessen werden kann. Die vollständig zusammen gebaute Pumpe, welche sich nun in der Haltevorrichtung befindet, erhält die elektrischen Anschlüsse und wird gestartet. Entscheidend für die auszuwertenden Ergebnisse des Triaxsensors beziehungsweise der Lichtschranke sind die bei Betriebsdrehzahl der Pumpe gemessenen Werte. Entsprechend dieser gemessenen Werte wird eine Wuchtklasse und ein Wuchtwinkel berechnet, woraufhin ein entsprechendes klassifiziertes Unwuchtausgleichselement 1 auf die Welle 19 geschoben wird. Dies geschieht in der Weise, dass das Unwuchtausgleichselement 1 in eine Ausnehmung einer Winkelgradscheibe gelegt und dort in einer Nullstellung fixiert wird. Nach Ermittlung des Wuchtwinkels zur Nullstellung kann das Unwuchtausgleichselement durch Drehung der Winkelgradscheibe auf den korrekten Winkel zur Motorwelle 19 gedreht werden und auf die Motorwelle geschoben werden. Üblicherweise werden die Laufräder 15, 18 dieser Pumpen 16 mittels eines anaeroben Klebers befestigt, so dass zusätzliche Befestigungsmittel für das Unwuchtausgleichselement 1 nicht notwendig sind, da der auf der Welle befindliche Restkleber ausreicht um das durch die Federarme 5 vorfixierte Unwuchtausgleichselement 1 endgültig auf der Welle 19 festzusetzen. In den Nuten 7 kann sich die Restklebermenge aus der Befestigung der Laufräder 15, 18 der Pumpe 16 gleichmäßig verteilen, ohne dass die gesamte Klebermenge beim Aufsetzen von der Welle 19 geschoben wird. Durch den Luftabschluß zwischen der inneren Umfangsfläche 3 des Unwuchtausgleichselementes 1 und der Außenfläche der Welle 19 kann dieser anaerobe Kleber nun in kurzer Zeit aushärten.

Sollte die Schwingwinkellage der axialen und der radialen gemessenen Beschleunigungen nicht gleich sein, so wird der Wuchtwinkel durch Gewichtung der Beschleunigungsamplituden unter Berücksichtigung der jeweiligen Schwingwinkel berechnet.

Somit kann mittels nur einer einzelnen Messung bei Betriebsdrehzahl der Pumpe und Messung der Beschleunigungen an den tatsächlichen Befestigungspunkten sowie der Schwingwinkel der Sekundärluftpumpe eine deutlich reduzierte Schwingbelastung der Sekundärluftpumpe erreicht werden, wodurch insbesondere Schallemissionen im Fahrzeug in besonderem Maße reduziert werden. Das dazu auf einer Pumpe anzuordnende Unwuchtausgleichselement ist einfach und kostengünstig herstellbar und durch die Federarme vorfixierbar. Durch eine derartige Ausführung des Unwuchtausgleichselementes beziehungsweise ein derartiges Verfahren zum Herstellen eines Unwuchtausgleichs an einer Pumpe entsteht eine hohe Kosten- und Zeitreduzierung bei gleichzeitig optimiertem Unwuchtausgleich.

## Patentansprüche

1. Unwuchtausgleichselement (1) zur Befestigung auf einem Ende (20) einer Motor- oder Pumpenwelle (19), wobei das Unwuchtausgleichselement (1) eine zur Mittelachse koaxiale innere Umfangsfläche (3) aufweist, deren Innendurchmesser im wesentlichen dem Außendurchmesser der Welle (19) entspricht, **dadurch gekennzeichnet, dass** die innere Umfangsfläche (3) in einem ersten Teilbereich (4) biegsame Federarme (5) aufweist, welche derart ausgebildet sind, dass die Federarme (5) im eingebauten Zustand eine zumindest in Umfangsrichtung kraftschlüssig wirkende Verbindung zur Welle (19) herstellen.

2. Unwuchtausgleichselement nach Anspruch 1, **dadurch gekennzeichnet, dass** die Federarme (5) als in Achsrichtung erstreckende Ringsegmente ausgebildet sind.

3. Unwuchtausgleichselement nach Anspruch 1 oder 2, **dadurch gekennzeichnet, dass** die innere Umfangsfläche (3) in einem zweiten starren Teilbereich (6) Nuten (7) aufweist, welche in Achsrichtung verlaufen.

4. Unwuchtausgleichselement nach einem der vorhergehenden Ansprüche, **dadurch gekennzeichnet, dass** das Unwuchtausgleichselement (1) eine geschlossene Außenumfangsfläche (10) aufweist, welche in radialer Richtung über definierte Winkelbereiche eine vollständig mit Material gefüllte Verbindung (11) zur Innenumfangsfläche (3) aufweist und in anderen Winkelbereichen durch einzelne Stege (12) mit der Innenumfangsfläche (3) verbunden ist.

5. Unwuchtausgleichselement nach einem der vorhergehenden Ansprüche, **dadurch gekennzeichnet, dass** das Unwuchtausgleichselement (1) einteilig im Spritzgußverfahren hergestellt ist.

6. Pumpe (16), insbesondere Sekundärluftpumpe für Verbrennungskraftmaschinen, welche von einem Elektromotor (17) angetrieben ist, wobei zumindest ein Laufrad (15, 18) der Pumpe (16) auf eine Antriebswelle (19) des Elektromotors (17) angeordnet ist, **dadurch gekennzeichnet, dass** die Antriebswelle (19) derart über das Laufrad (15) der Pumpe (16) in zum Elektromotor (17) abgewandter Richtung übersteht, dass ein Unwuchtausgleichselement (1) nach einem der vorhergehenden Ansprüche auf dem überstehenden Ende (20) der Welle (19) befestigt ist.

7. Pumpe, insbesondere Sekundärluftpumpe für Verbrennungskraftmaschinen nach Anspruch 6, **dadurch gekennzeichnet, dass** ein Anschlussstutzen (21) der Pumpe (16) koaxial zur Antriebswelle (19) verläuft.

8. Pumpe, insbesondere Sekundärluftpumpe für Verbrennungskraftmaschinen, nach einem der Ansprüche 6 oder 7, **dadurch gekennzeichnet, dass** die Befestigung des Unwuchtausgleichselementes (1) auf der Antriebswelle (19) mittels eines anaeroben Klebers erfolgt.

9. Pumpe, insbesondere Sekundärluftpumpe für Verbrennungskraftmaschinen, nach einem der Ansprüche 6 bis 8, **dadurch gekennzeichnet, dass** die zueinander gerichteten axialen Außenflächen (13) des Unwuchtausgleichselementes (1) und einer Nabe (14) des Pumpenlaufrades (15) in ihrer Form korrespondieren.

10. Verfahren zum Auswuchten elektromotorisch angetriebener Pumpen (16) nach einem der Ansprüche 6 bis 9 durch Einebenwuchtung mit folgenden Schritten.
a) Einlegen der Pumpe (16) in eine Haltevorrichtung unter Zwischenlage von Elastomeren und Herstellen einer elektrischen Verbindung zu einer Spannungsquelle,
b) Starten des Elektromotors (17),
c) Messen der Schwingbeschleunigung beziehungsweise der Beschleunigungsamplituden in axialer und radialer Richtung und Messen der Schwingwinkellage zum Bestimmen des Wuchtwinkels und der Wuchtklasse.
d) Aufsetzen eines klassifizierten Unwuchtausgleichselementes (1) nach einem der Ansprüche 1 bis 5 entsprechend des ermittelten Wuchtwinkels und der ermittelten Wuchtklasse.
e) Herausnehmen der Pumpe (16) aus der Haltevorrichtung.

11. Verfahren zum Auswuchten elektromotorisch angetriebener Pumpen (16) nach Anspruch 10, **dadurch gekennzeichnet, dass** zum Messen der Schwingwinkellage eine Lichtschranke sowie eine formschlüssig mit der Antriebswelle (19) verbundene Reflektionsscheibe verwendet wird.

12. Verfahren zum Auswuchten elektromotorisch angetriebener Pumpen (16) nach einem der Ansprüche 10 oder 11, **dadurch gekennzeichnet, dass** zum Messen der Schwingbeschleunigung ein Triaxsensor verwendet wird.

13. Verfahren zum Auswuchten elektromotorisch angetriebener Pumpen (16) nach einem der Ansprüche 10 bis 12, **dadurch gekennzeichnet, dass** die Messungen bei Betriebsdrehzahl der fertig montierten Pumpe (16) durchgeführt werden.

14. Verfahren zum Auswuchten elektromotorisch angetriebener Pumpen (16) nach einem der Ansprüche 10 bis 13, **dadurch gekennzeichnet, dass** die Messung der Schwingbeschleunigung an den Befestigungspunkten (27) der Pumpe (16) zur Verbrennungskraftmaschine oder zum Fahrzeug durchgeführt wird.

15. Verfahren zum Auswuchten elektromotorisch angetriebener Pumpen (16) nach einem der Ansprüche 10 bis 14, **dadurch gekennzeichnet, dass** bei nicht gleicher Schwingwinkellage der axialen und radialen Beschleunigungsamplituden der Wuchtwinkel und die Wuchtklasse durch Gewichtung der Beschleunigungsamplituden unter Berücksichtigung der Schwingwinkellagen berechnet wird.

16. Verfahren zum Auswuchten elektromotorisch angetriebener Pumpen (16) nach einem der Ansprüche 10 bis 15, **dadurch gekennzeichnet, dass** das Unwuchtausgleichselement (1) vor der Befestigung an der Welle (19) in einer Ausnehmung einer Winkelgradscheibe fixiert wird, so dass nach Ermittlung des Wuchtwinkels zur Nullstellung das Unwuchtausgleichselement (1) durch Drehung der Winkelgradschabe auf den ermittelten Wuchtwinkel in die korrekte Lage zur Welle (19) gedreht auf die Welle (19) geschoben und befestigt wird.

## Claims

1. Balancing element (1) for fastening to one end (20) of a motor or pump shaft (19), wherein the balancing element (1) comprises an inner circumferential surface (3) which is coaxial with the centre axis and the inside diameter of which corresponds substantially to the outside diameter of the shaft (19), **characterised in that**, in a first subregion (4), the inner circumferential surface (3) comprises flexible spring arms (5) which are formed such that, when in the fitted state, the spring arms (5) establish a connection to the shaft (19) which acts non-positively at least in the circumferential direction.

2. Balancing element according to Claim 1, **characterised in that** the spring arms (5) are formed as ring segments which extend in the axial direction.

3. Balancing element according to Claim 1 or 2, **characterised in that**, in a second rigid subregion (6), the inner circumferential surface (3) comprises grooves (7) which extend in the axial direction.

4. Balancing element according to any one of the preceding Claims, **characterised in that** the balancing element (1) comprises a closed outer circumferential surface (10) which comprises a connection (11), which is completely filled with material, to the inner circumferential surface (3) in the radial direction over defined angular regions and is connected to the inner circumferential surface (3) by individual webs (12) in other angular regions.

5. Balancing element according to any one of the preceding Claims, **characterised in that** the balancing element (1) is produced in one part in an injection moulding process.

6. Pump (16), in particular secondary air pump for internal combustion engines, which is driven by an electric motor (17), wherein at least one impeller (15, 18) of the pump (16) is disposed on a drive shaft (19) of the electric motor (17), **characterised in that** the drive shaft (19) projects beyond the impeller (15) of the pump (16) in the direction remote from the electric motor (17) such that a balancing element (1) according to any one of the preceding Claims is fastened to the projecting end (20) of the shaft (19).

7. Pump, in particular secondary air pump for internal combustion engines according to Claim 6, **characterised in that** a connecting piece (21) of the pump (16) extends coaxially with the drive shaft (19).

8. Pump, in particular secondary air pump for internal combustion engines, according to either of Claims 6 and 7, **characterised in that** the balancing element (1) is fastened to the drive shaft (19) by means of an anaerobic adhesive.

9. Pump, in particular secondary air pump for internal combustion engines, according to any one of Claims 6 to 8, **characterised in that** the axial outer surfaces (13), directed towards one another, of the balancing element (1) and a hub (14) of the pump impeller (15) correspond in their shape.

10. Method for balancing electric motor-driven pumps (16) according to any one of Claims 6 to 9 through single-plane balancing, comprising the following steps:
a) placing the pump (16) in a holding device with the interposition of elastomers and establishing an electrical connection to a voltage source,
b) starting the electric motor (17),
c) measuring the oscillation acceleration or the acceleration amplitudes in the axial and the radial direction and measuring the oscillation angular position to determine the balance angle and the balance class,
d) positioning a classified balancing element (1) according to any one of Claims 1 to 5 according to the established balance angle and the established balance class,
e) removing the pump (16) from the holding device.

11. Method for balancing electric motor-driven pumps (16) according to Claim 10, **characterised in that** a light barrier as well as a reflection disc positively connected to the drive shaft (19) are used to measure the oscillation angular position.

12. Method for balancing electric motor-driven pumps (16) according to either of Claims 10 and 11, **characterised in that** a triax sensor is used to measure the oscillation acceleration.

13. Method for balancing electric motor-driven pumps (16) according to any one of Claims 10 to 12, **characterised in that** the measurements are carried out at the operating speed of the finally assembled pump (16).

14. Method for balancing electric motor-driven pumps (16) according to any one of Claims 10 to 13, **characterised in that** the measurement of the oscillation acceleration is carried out at the fastening points (27) of the pump (16) to the internal combustion engine or to the vehicle.

15. Method for balancing electric motor-driven pumps (16) according to any one of Claims 10 to 14, **characterised in that**, if the oscillation angular positions of the axial and radial acceleration amplitudes are not equal, the balance angle and the balance class are calculated by weighting the acceleration amplitudes while taking account of the oscillation angular positions.

16. Method for balancing electric motor-driven pumps (16) according to any one of Claims 10 to 15, **characterised in that** the balancing element (1) is fixed in a recess of an angular degree disc before being fastened to the shaft (19), so that, after establishing the balance angle relative to the zero position, by turning the angular degree disc to the established balance angle, the balancing element (1) is turned into the correct position relative to the shaft (19) and pushed onto the shaft (19) and fastened.

## Revendications

1. Élément d'équilibrage de balourd (1) pour la fixation sur une extrémité (20) d'un arbre (19) de moteur ou de pompe, l'élément d'équilibrage de balourd (1) présentant une surface périphérique intérieure (3) coaxiale à l'axe médian, dont le diamètre intérieur correspond essentiellement au diamètre extérieur de l'arbre (19), **caractérisé en ce que** la surface périphérique intérieure (3) présente dans une première zone partielle (4) des bras à ressort flexibles (5), qui sont configurés de telle sorte que les bras à ressort flexibles (5) produisent à l'état monté une liaison par rapport à l'arbre (19) agissant par force d'adhérence au moins dans la direction périphérique.

2. Élément d'équilibrage de balourd suivant la revendication 1, **caractérisé en ce que** les bras à ressort (5) sont configurés sous forme de segments annulaires s'étendant dans la direction axiale.

3. Élément d'équilibrage de balourd suivant l'une des revendications 1 et 2, **caractérisé en ce que** la surface périphérique intérieure (3) présente dans une seconde zone partielle rigide (6) des gorges (7), qui s'étendent dans la direction axiale.

4. Élément d'équilibrage de balourd suivant l'une des revendications précédentes, **caractérisé en ce que** l'élément d'équilibrage de balourd (1) présente une surface périphérique extérieure fermée (10), qui présente dans la direction radiale une liaison (11) totalement remplie de matière par rapport à la surface périphérique intérieure (3) sur des zones angulaires définies, et est reliée dans d'autres zones angulaires par des traverses individuelles (12) à la surface périphérique intérieure (3).

5. Élément d'équilibrage de balourd suivant l'une des revendications précédentes, **caractérisé en ce que** l'élément d'équilibrage de balourd (1) est fabriqué d'une seule pièce dans le procédé de moulage par injection.

6. Pompe (16), en particulier pompe à air secondaire pour des moteurs à combustion interne, qui est entraînée par un moteur électrique (17), au moins une roue mobile (15, 18) de la pompe (16) étant disposée sur un arbre d'entraînement (19) du moteur électrique (17), **caractérisée en ce que** l'arbre d'entraînement (19) dépasse de la roue mobile (15) de la pompe (16) dans la direction opposée au moteur électrique (17) de telle sorte qu'un élément d'équilibrage de balourd (1) suivant l'une des revendications précédentes est fixé sur l'extrémité qui dépasse (20) de l'arbre (19).

7. Pompe, en particulier pompe à air secondaire pour des moteurs à combustion interne, suivant la revendication 6, **caractérisée en ce qu'**une tubulure de raccordement (21) de la pompe (16) s'étend coaxialement par rapport à l'arbre d'entraînement (19).

8. Pompe, en particulier pompe à air secondaire pour des moteurs à combustion interne, suivant l'une des revendications 6 et 7, **caractérisée en ce que** la fixation de l'élément d'équilibrage de balourd (1) sur l'arbre d'entraînement (19) s'effectue au moyen d'une colle anaérobie.

9. Pompe, en particulier pompe à air secondaire pour des moteurs à combustion interne, suivant l'une des revendications 6 à 8, **caractérisée en ce que** les surfaces extérieures axiales (13) orientées l'une vers l'autre de l'élément d'équilibrage de balourd (1) et d'un moyeu (14) de la roue mobile de pompe (15) correspondent dans leur forme.

10. Procédé pour débalourder des pompes (16) entraînées par moteur électrique suivant l'une des revendications 6 à 9 par équilibrage statique comprenant les étapes suivantes :
a) insertion de la pompe (16) dans un dispositif de maintien avec intercalation d'élastomères et réalisation d'une liaison électrique avec une source de tension,
b) démarrage du moteur électrique (17),
c) mesure de l'accélération de vibration ou des amplitudes d'accélération dans la direction axiale et radiale et mesure de la position des angles de vibration pour déterminer l'angle d'équilibrage et la classe d'équilibrage,
d) mise en place d'un élément d'équilibrage de balourd (1) classifié suivant l'une des revendications 1 à 5 correspondant à l'angle d'équilibrage et la classe d'équilibrage déterminés,
e) retrait de la pompe (16) du dispositif de maintien.

11. Procédé pour débalourder des pompes (16) entraînées par moteur électrique suivant la revendication 10, **caractérisé en ce qu'**une barrière lumineuse ainsi qu'un disque réflecteur relié par coopération de forme à l'arbre d'entraînement (19) sont utilisés pour la mesure de la position des angles de vibration.

12. Procédé pour débalourder des pompes (16) entraînées par moteur électrique suivant l'une des revendications 10 et 11, **caractérisé en ce qu'**un capteur triaxial est utilisé pour mesurer l'accélération de vibration.

13. Procédé pour débalourder des pompes (16) entraînées par moteur électrique suivant l'une des revendications 10 à 12, **caractérisé en ce que** les mesures sont effectuées à la vitesse de service de la pompe (16) à l'état définitivement monté.

14. Procédé pour débalourder des pompes (16) entraînées par moteur électrique suivant l'une des revendications 10 à 13, **caractérisé en ce que** la mesure de l'accélération de vibration est effectuée aux points de fixation (27) de la pompe (16) au moteur à combustion interne ou au véhicule.

15. Procédé pour débalourder des pompes (16) entraînées par moteur électrique suivant l'une des revendications 10 à 14, **caractérisé en ce que**, dans le cas de position des angles de vibration des amplitudes d'accélération axiale et radiale non identique, l'angle d'équilibrage et la classe d'équilibrage sont calculés par pondération des amplitudes d'accélération compte tenu des positions des angles de vibration.

16. Procédé pour débalourder des pompes (16) entraînées par moteur électrique suivant l'une des revendications 10 à 15, **caractérisé en ce que** l'élément d'équilibrage de balourd (1) est fixé dans un évidement d'un disque gradué avant sa fixation sur l'arbre (19) de sorte que, après la détermination de l'angle d'équilibrage par rapport à la position zéro, l'élément d'équilibrage de balourd (1) est pivoté dans la position correcte par rapport à l'arbre (19) par rotation du disque gradué sur l'angle d'équilibrage déterminé, et est poussé et fixé sur l'arbre (19).
